# EUROPÄISCHE PATENTSCHRIFT

(11) **EP 1 870 267 B1**
(45) Veröffentlichungstag und Bekanntmachung des Hinweises auf die Patenterteilung: **19.05.2010**
(21) Anmeldenummer: 07011558.9
(22) Anmeldetag: 13.06.2007
(51) Int. Cl.: B60G 17/0195, F16F 1/38, B60Q 1/115, G01D 5/22, G01D 5/241, G01D 5/20

(54) **Buchse mit Sensoreinrichtung**
Bush with sensor arrangement
Manchon avec arrangement de capteur

(30) Priorität: 21.06.2006 DE 102006028902
(43) Veröffentlichungstag der Anmeldung: 26.12.2007
(73) Patentinhaber: Carl Freudenberg KG, 69469 Weinheim (DE)
(72) Erfinder: Schmied, Benno, 67071 Ludwigshafen (DE); Köck, Gordon, 69198 Schriesheim (DE); Pelz, Peter, Dr. Prof., 64285 Darmstadt (DE)

(56) Entgegenhaltungen:
- EP-A- 1 707 839
- DE-A1- 10 221 873
- FR-A1- 2 858 673

## Beschreibung

### Technisches Gebiet

Die Erfindung betrifft eine Buchse gemäß dem Oberbegriff des Patentanspruchs 1.

### Stand der Technik

Derartige Buchsen sind aus dem Stand der Technik bereits bekannt. Sie finden Verwendung in Fahrwerken von Kraftfahrzeugen. Die Verwendung dieser Buchsen ermöglicht beispielsweise eine Nachführung bzw. Einstellung von Scheinwerferpositionen, Insbesondere können die Scheinwerfer eines beladenen Fahrzeuges derart nachgeregelt werden, dass ihre Abstrahlcharakteristik der eines unbeladenen Fahrzeugs entspricht.

Eine solche Buchse kann auch zur Niveauregulierung von luftgefederten Fahrzeugen dienen, bzw. Signale für eine adaptive Fahrwerksregelung liefern.

Hierzu werden die gattungsbildenden Buchsen im Fahrwerk von Kraftfahrzeugen positioniert. Dabei ist eine Hülse der Buchse dem Chassis und eine andere Hülse der Buchse einem Rad oder einem Achsenteil zugeordnet. Je nach Einfederweg bzw. Belastung des Kraftfahrzeuges stellt sich zwischen dem Achsenteil und dem Chassis ein Winkel ein, der einem Verdrehwinkel der Innenhülse relativ zur Außenhülse der Buchse entspricht

Dieser Verdrehwinkel kann erfasst werden und durch eine nachgelagerte Elektronikeinrichtung verarbeitet werden. Die Elektronikeinrichtung kann dann an die Scheinwerfer des Kraftfahrzeugs Signale senden, die eine Nachregelung der Scheinwerferpositionen bewirken.

Die Signale können auch Ventile einer Niveauregelung öffnen. Im Falle einer Fahrwerksregelung werden Stellströme an ein Dämpferventil geschaltet.

Im Betrieb eines Kraftfahrzeugs werden die Hülsen einer Buchse jedoch nicht nur relativ zueinander verdreht, sondern des Weiteren sowohl translatorisch als auch kardanisch gegeneinander verschoben. Hierbei ist problematisch, dass der Verdrehwinkel, der sich lediglich aus einer rotatorischen oder torsionalen Bewegung der Hülsen gegeneinander ergibt, nur sehr ungenau gemessen werden kann. Die Folge hiervon ist eine Fehleinstellung der Scheinwerfer des Kraftfahrzeuges.

Aus der DE 102 21 873 A1 ist eine gattungsbildende Buchse bekannt, die mehrere Sensoren aufweiset.

### Darstellung der Erfindung

Der Erfindung liegt daher die Aufgabe zu Grunde, eine Buchse der eingangs genannten Art derart auszugestalten und weiterzubilden, dass mittels einer mechanischen Kompensierung von überlagerten Bewegungen eine rotatorische Bewegung der Innenhülse relativ zur Außenhülse erfasst werden kann.

Die vorliegende Erfindung löst die zuvor genannte Aufgabe durch die.Merkmale des Patentanspruchs 1. Danach ist eine Buchse der eingangs genannten Art dadurch gekennzeichnet, dass die Mittel ein zumindest bereichsweise flexibel deformierbares Element umfassen, welches mit einem Ende drehfest entweder an der Innenhülse oder an der Außenhülse angelenkt und mit seinem anderen Ende rotationsbeweglich der Außenhülse bzw. der Innenhülse zugeordnet ist.

Erfindungsgemäß ist erkannt worden, dass kardanische und/oder translatorische Bewegungen der Innenhülse relativ zur Außenhülse das Messergebnis einer Sensoreinrichtung verfälschen. In einem weiteren Schritt ist erkannt worden, dass die einzelnen Bewegungen der Außenhülse bzw. Innenhülse einer Buchse messtechnisch voneinander entkoppelt werden müssen. Schließlich ist erkannt worden, dass die Vorkehrung von Mitteln, welche solche Bewegungen kompensieren, die nicht zu einer rotatorischen bzw. torsionalen Bewegung der Außenhülse relativ zur Innenhülse beitragen, die Messgenauigkeit einer Buchse erheblich erhöhen. Insoweit ist eine Buchse angegeben, welche den Verdrehwinkel zwischen Innenhülse und Außenhülse möglichst exakt erfassen kann.

Die Mittel umfassen zumindest ein bereichsweise flexibel deformierbares Element, welches mit einem Ende drehfest entweder an der Innenhülse oder an Außenhülse angelenkt und mit seinem anderen Ende rotationsbeweglich der Außenhülse bzw. der Innenhülse zugeordnet ist. Diese konkrete Ausgestaltung realisiert auf überraschend einfache Weise die Kompensierung von Bewegungen, die einer Rotationsbewegung von Außenhülse und Innenhülse überlagert sind. Durch die bereichsweise flexible Deformierbarkeit des Elements werden axiale, radiale, kardanische oder andere translatorische Bewegungen der Außenhülse bzw. der Innenhülse relativ zueinander von dem Element selbst aufgenommen und gehen in diesem quasi verloren. Lediglich rotatorische Bewegungen werden auf das freie Ende übertragen. Insoweit ist durch diese konkrete Ausgestaltung eine mechanische Kompensierung von Bewegungen realisiert, die einer torsionalen bzw. rotatorischen Bewegung der Innenhülse relativ zur Außenhülse überlagert sind.

Folglich ist die eingangs genannte Aufgabe gelöst.

Die Mittel könnten ersten und zweiten Sensorelektroden zugeordnet sein, wobei eine Sensorelektrode der Innenhülse und eine Sensorelektrode der Außenhülse zugeordnet ist. Die Vorkehrung von Sensorelektroden erlaubt eine problemlose Anordnung der Mittel an den jeweiligen Hülsen. Durch die konkrete Zuordnung der Sensorelektroden an einzelne Hülsen kann die Verdrehung der Hülsen relativ zueinander besonders genau erfasst werden.

Die Mittel könnten einander gegenüber liegende erste und zweite Kondensatorplatten umfassen. Die Verwendung von Kondensatorplatten erlaubt die exakte Bestimmung der Kapazität eines Kondensators. Die Kapazität eines Plattenkondensators ist proportional zur Fläche des 4 Kondensators. Die Fläche eines Kondensators ist ein Maß für die Überlappung zweier sich gegenüber liegender Kondensatorplatten, Aus dem Maß der Überlappung kann auf die relative Verdrehung der Kondensatorplatten und damit der Hülsen der Buchse geschlossen werden.

Vor diesem Hintergrund ist auch denkbar, dass Kondensatorplatten innerhalb des elastischen Mediums, beispielsweise innerhalb eines Elastomers, angeordnet sind. Diese konkrete Ausgestaltung gewährleistet eine besonders kompakte Ausführungsform der Buchse. die Kondensatorplatten werden durch das Elastomer geschützt und das Elastomer fungiert als Dielektrikum. Hierdurch wird die Kapazität des Kondensators erhöht, wodurch dessen Kapazität leichter zu messen ist.

Die Mittel könnten einander gegenüber liegende erste und zweite Leiterstrukturen umfassen, welche mäanderförmig ausgestaltet und induktiv wirksam sind. Die Vorkehrung mäanderförmig ausgestalteter Leiterstrukturen erlaubt die wirksame und effektive Erzeugung von Induktionsspannungen in Abhängigkeit von der Überlappung der einander gegenüber liegenden Leiterstrukturen. Durch diese konkrete Ausgestaltung ist eine induktive Messung des Verdrehwinkels möglich.

Die Mittel auf einer Sensorelektrode könnten eine andere flächige Ausdehnung als die Mittel auf der anderen Sensorelektrode aufweisen. Dabei ist ganz konkret denkbar, dass die Mittel auf der zweiten Sensorelektrode als Quadrate und die Mittel auf der erste Sensorelektrode als Rechtecke ausgestaltet sind. Dabei könnten die Rechtecke auf der ersten Sensorelektrode unterschiedliche Flächen aufweisen. Diese konkrete Ausgestaltung ist von Vorteil, wenn sich die Mittel der ersten Sensorelektrode und der zweiten Sensorelektrode so gegenüber liegen, dass bei einer Radialverschiebung der Außenhülse relativ zur Innenhülse der Überlappungsgrad bestimmter einander gegenüber liegender Mittel geändert wird und der Überlappungsgrad anderer sich gegenüber liegender Mittel konstant bleibt. Durch diese konkrete Ausgestaltung ist zusätzlich zu einer torsionalen Bewegung eine radiale Bewegung elektrisch erfassbar. Unter flächenmäßiger Ausdehnung wird hierbei die maximale Ausdehnung der Kondensatorplatten bzw. der mäanderförmigen Leiterstrukturen verstanden. Die hier beschriebene Wirkungsweise ist sowohl auf Kondensatorplatten als auch auf induktiv wirkende Leiterstrukturen anwendbar.

Die Mittel könnten relativ zur Buchsenachse umfänglich angeordnet sein. Diese konkrete Ausgestaltung stellt sicher, dass ein elektrisches Signal nicht nur von zwei einander gegenüber liegenden Kondensatorplatten oder Leiterstrukturen erzeugt wird, sondern dass eine Vielzahl von elektrischen Signalen von einer Vielzahl einander gegenüber liegender Leiterstrukturen bzw. Kondensatorplatten erzeugbar sind. Hierdurch wird die Auflösung der Verdrehwinkelmessung erhöht. Es ist denkbar, dass die Kondensatorplatten oder Leiterstrukturen kreisförmig, insbesondere konzentrisch zur Buchsenachse, auf einer Sensorelektrode angeordnet sind.

Zumindest einer Sensorelektrode könnte eine Tellerfeder zugeordnet sein oder könnte als Tellerfeder ausgebildet sein. Die Verwendung einer Tellerfeder erlaubt das Zusammenführen zweier Sensorelektroden unter Vorspannung. Bei einer kardanischen Verkippung der Außenhülse relativ zur Innenhülse kompensiert die Vorspannung der Tellerfeder die Bewegungen der kardanischen Bewegung, die einer torsionalen Bewegung überlagert sind. Bei dieser konkreten Ausgestaltung ist es möglich, dass der Abstand zweier Kondensatorplatten bzw. einander gegenüber liegender Leiterstrukturen auch bei kardanischer Bewegung nahezu konstant bleibt.

Vor diesem Hintergrund ist denkbar, Tellerfedern aus Stahl oder Kunststoff zu verwenden, die eine Materialstärke von 0,1 bis 0,2 mm aufweisen. Diese Materialstärke hat sich als besonders vorteilhaft erwiesen, um eine ausreichende Vorspannung zu realisieren.

Den Sensorelektroden und/oder den Mittel könnten folienartige Lagen zugeordnet sein. Folienartige Lagen schützen einerseits sowohl die Sensorelektroden als auch die Mittel. Dabei ist denkbar, dass eine Sensorelektrode sowohl auf ihrer den Mitteln abgewandten Seite als auch auf der den Mitteln zugewandten Seite mit einer Folie versehen ist. Die Mittel selbst könnten ihrerseits wieder von einer Folie bedeckt sein. Diese konkrete Ausgestaltung stellt sicher, dass sowohl die Sensorelektrode als auch die Mittel in einer dreilagigen Folienanordnung eingebettet sind. Hierdurch werden die Folien und die Sensorelektroden vor Umwelteinflüssen geschützt. Vor diesem Hintergrund ist auch denkbar, in den Folien Dieelektrika einzubinden, welche die Kapazität einer Kondensatoranordnung erhöhen. Ganz konkret ist vor diesem Hintergrund denkbar, die Folien als Polyesterfolien auszugestalten. Polyester hat sich als besonders gebrauchstaugliches Material für die Anwendung in Fahrwerksbuchsen erwiesen.

Schließlich ist auch denkbar, dass eine Folie mit Kondensatorplatten oder Leiterstrukturen als Sensorelektrode fungiert. Die Kondensatorplatten oder Leiterstruktruren könnten auf die Folie auflaminiert oder aufgeätzt sein. Sensorelektroden dieser Ausgestaltung zeigen eine besondere Elastizität, so dass der Abstand einander gegenüberliegender Kondensatorplatten und Leiterstrukturen auch bei radialen, axialen oder kardanischen Bewegungen bzw. Verkippungen der Hülsen nahezu konstant bleibt. Ein Verbund aus zwei solchen Sensorelektroden könnte zusätzlich zwischen zwei Tellerfedern aufgenommen werden, welche die nahezu konstante Beabstandung zweier Folien zusätzlich sicherstellen.

Vor diesem Hintergrund ist denkbar, dass das rotationsbewegliche Ende an einer Gleithülse angelenkt ist, die relativ zur Außenhülse bzw. Innenhülse verdrehbar ist. Die Vorkehrung einer Gleithülse erlaubt vorteilhaft die Positionierung von Mitteln wie Kondensatorplatten oder induktiv wirkenden Leiterstrukturen am freien Ende des elastisch deformierbaren Elements. Die Gleithülse kann aus einem Kunststoff oder Metall gefertigt sein und bietet den Mitteln eine stabile Auflage. Insoweit fungiert die Gleithülse als Aufnahme für eine Sensorelektrode oder kann sogar als solche ausgestaltet sein.

Die Innenhülse und/oder die Außenhülse könnten Ausnehmungen zur Aufnahme zur Gleithülse oder des Elements aufweisen. Durch diese konkrete Ausgestaltung ist sicher gestellt, dass an der Außenhülse bzw. der Innenhülse keine Überstände auftreten, an denen weitere Bauteile eines Fahrwerks hängen bleiben können. Insoweit stellt eine so ausgestaltete Fahrwerksbuchse eine besonders glatte und gebrauchstaugliche Oberfläche zur Verfügung.

Denkbar ist auch, dass die Gleithülse mit Rastmitteln an der Innenhülse oder der Außenhülse geführt wird. Als Rastmittel könnten Nut und Federelemente vorgesehen sein. Dabei kann die Nut entweder in der Gleithülse oder in der Innenhülse bzw. Außenhülse ausgebildet sein. Hierdurch ist eine nahezu spielfreie Führung der Gleithülse möglich.

Ganz in Abhängigkeit von dem Einsatz der Buchse kann die Gleithülse der Außenhülse oder der Innenhülse zugeordnet sein. Die Zuordnung der Gleithülse zur Innenhülse bewirkt geringere Bewegungen der Gleithülse, da diese einen geringeren Bogenwinkel beschreiben muss, wenn sie bewegt wird.

Diese konkrete Ausgestaltung erlaubt eine Minimierung des Verschleißes der Gleithülse, da diese geringeren Reibungsverlusten unterworfen wird.

Der Gleithülse könnte eine Dichtung zugeordnet sein. Die Vorkehrung einer Dichtung verhindert wirksam das Eindringen von Verschmutzungen oder Schmutzpartikeln in den Bereich der einander gegenüber liegenden Mittel. Insbesondere wird hierdurch wirksam vermieden, dass Schmutzpartikel zwischen Kondensatorplatten eindringen und die Kapazität eines Kondensators verändern und damit Messwerte verfälschen.

Vor diesem Hintergrund ist denkbar, dass die Dichtung als Dichtlippe ausgebildet ist. die Dichtlippe könnte dabei schleifend auf einem Vorsprung der Außenhülse bzw. der Innenhülse gleiten. Durch diese Ausgestaltung ist eine besonders zuverlässige Abdichtung der Sensoreinrichtung sichergestellt.

Die Dichtung könnte mehrere Dichtlippen aufweisen. Mit diesen könnte die Dichtung einen Rand der Außen- oder Innenhülse umgreifen und die Führung der Gleithülse stabilisieren sowie die Dichtwirkung erhöhen.

Es ist des Weiteren denkbar, dass in der Gleithülse eine Ausnehmung vorgesehen ist, in der eine Dichtung positioniert ist. Die Dichtung kann gleitend an der Wandung der Außenhülse bzw. der Innenhülse verfahren werden.

Das elastisch deformierbare Element könnte als Membran ausgestaltet sein. Diese konkrete Ausgestaltung stellt sicher, dass die Buchse zumindest einseitig durch die Membran abdichtbar ist. Hierdurch kann die Sensoreinrichtung wirksam vor Verschmutzungen geschützt werden. Die Membran kann beispielsweise aus einem Elastomer, Gummi, Polyurethan, Silikon oder einem thermoplastischen Elastomer bestehen. Diese Werkstoffe zeichnen sich in besonderer Weise durch hohe Elastizität und chemische Resistenz aus. Eine chemische Resistenz ist insbesondere beim Einsatz in Kraftfahrzeugen von Vorteil, da Buchsen häufig Maschinen- und Motorölen ausgesetzt werden. Diese Öle können chemisch agressiv sein.

Die Membran könnte in radialer und axialer Richtung weich und in torsionaler Richtung steif wirkend ausgebildet sein. Dies könnte durch eine Gewebeverstärkung der Membran oder eine andere verstärkende Einlage innerhalb der Membran erzielt werden. Insbesondere sind thermoplastische Fäden denkbar, aus denen die Gewebeverstärkung oder die Einlage gefertigt sein könnte. Hierdurch ist eine besonders hohe Torsionssteifigkeit einer Membran einstellbar.

Die Membran könnte in axialer Richtung eine Vorspannung aufweisen. Dies erlaubt eine genaue Positionierung der Gleithülse und verhindert deren Abheben oder Loslösen von der Innenhülse bzw. Außenhülse.

Die Dichtung und das Element könnten ein Volumen abdichten, in dem die Mittel der Sensoreinrichtung positioniert sind. Diese konkrete Ausgestaltung stellt auf besonders raffinierte Weise sicher, dass die Sensoreinrichtung eine lange Lebensdauer und hohe Messgenauigkeit aufweist, da diese vor Verschmutzungen geschützt wird.

Das elastische Medium, welches die Außenhülse von der Innenhülse abtrennt, könnte als Elastomer, Polyurethan, Silikon oder thermoplastisches Elastomer ausgestaltet sein. Diese Werkstoffe zeichnen sich durch eine hohe Elastizität aus. Des Weiteren ist denkbar, dass das elastische Medium als Gummi ausgestaltet ist. Gummi lässt sich in besonders günstiger Weise mit metallischen Hülsen durch Vulkanisation fest verbinden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung bevorzugter Ausführungsbeispiele der Erfindung an Hand der Zeichnung zu verweisen.

In Verbindung mit der Erläuterung der bevorzugten Ausführungsbeispiele der Erfindung an Hand der Zeichnung werden auch im allgemeinen bevorzugte Ausgestaltungen und Weiterbildungen der Lehre erläutert.

### Kurzbeschreibung der Zeichnung

In der Zeichnung zeigen
- Fig. 1: eine Buchse mit zwei Sensorelektroden,
- Fig. 2: eine Schnittansicht von Sensorelektroden, denen flächige Lagen zugeordnet sind,
- Fig. 3: zwei Sensorelektroden mit Kondensatorplatten,
- Fig. 4: zwei Sensorelektroden mit induktiv wirksamen Leiterstrukturen,
- Fig. 5: eine Buchse mit einer Gleithülse, die der Außenhülse zugeordnet ist,
- Fig. 6: eine Buchse mit einer Gleithülse, die der Innenhülse zugeordnet ist,
- Fig. 7: eine Buchse mit einer Gleithülse, welche eine Dichtung aufweist, die dem drehbeweglichen Ende eines bereichsweise flexibel deformierbaren Elements zugewandt ist,
- Fig. 8: eine Buchse mit einer Gleithülse, welche eine Dichtung aufweist, die dem drehbeweglichen Ende eines bereichsweise flexibel deformierbaren Elements abgewandt ist,
- Fig. 9: eine Buchse mit einer Gleithülse, der eine Dichtlippe zugeordnet ist,
- Fig. 10: eine Buchse mit einer Gleithülse, die eine Dichtlippe aufweist, welche auf einem Vorsprung der Außenhülse gleitet, und
- Fig. 11: eine Buchse mit einer Gleithülse, die eine Dichtung mit mehreren Dichtlippen aufweist.

### Ausührung der Erfindung

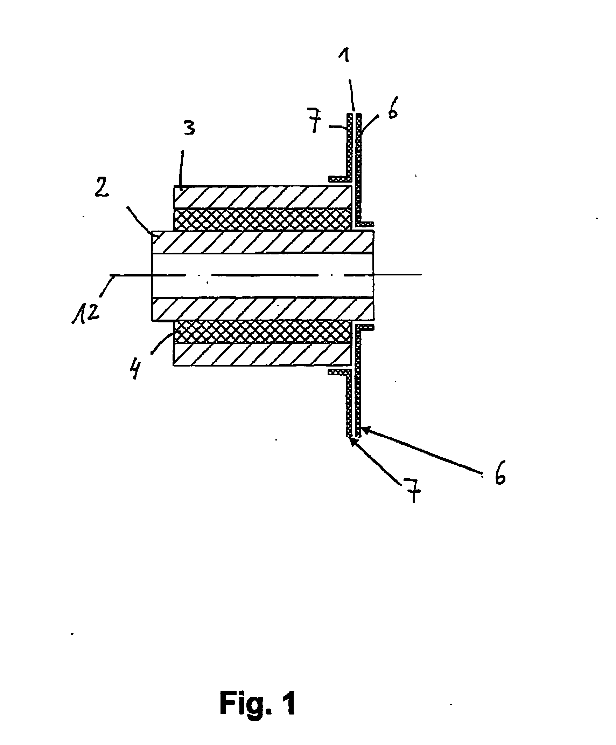

Bei den Ausführungsbeispielen von Figuren 1-4 handelt es sich nicht um einen Teil der Erfindung, sondern um Beispiele, die das Verständnis der Erfindung erleichtern.

Fig. 1 zeigt eine Buchse mit einer Sensoreinrichtung 1, einer Innenhülse 2 und einer diese umgebenden Außenhülse 3. Zwischen Innenhülse 2 und Außenhülse 3 ist ein elastisches Medium 4 angeordnet, welches als Gummi ausgestaltet ist. Das elastische Medium 4 wirkt einer Bewegung der Innenhülse 2 relativ zur Außenhülse 3 entgegen. Das elastische Medium 4 führt die Innenhülse 2 relativ zur Außenhülse 3 und ermöglicht eine gezielte Verdrehung der Innenhülse 2 relativ zur Außenhülse 3. Die Sensoreinrichtung 1 detektiert die Bewegung der Innenhülse 2 relativ zur Außenhülse 3.

Die Sensoreinrichtung 1 weist Mittel auf, die Bewegungen der Innenhülse 2 relativ zur Außenhülse 3 kompensieren, welche einer torsionalen Bewegung der Innenhülse 2 relativ zur Außenhülse 3 überlagert sind.

Die Buchse gemäß Fig. 1 weist eine erste Sensorelektrode 6 auf, welche der Innenhülse 2 zugeordnet ist. Die Buchse weist des Weiteren eine Sensorelektrode 7 auf, weiche der Außenhülse 3 zugeordnet ist. Die Innenhülse 2 und die Außenhülse 3 sind konzentrisch zur Buchsenachse 12 angeordnet.

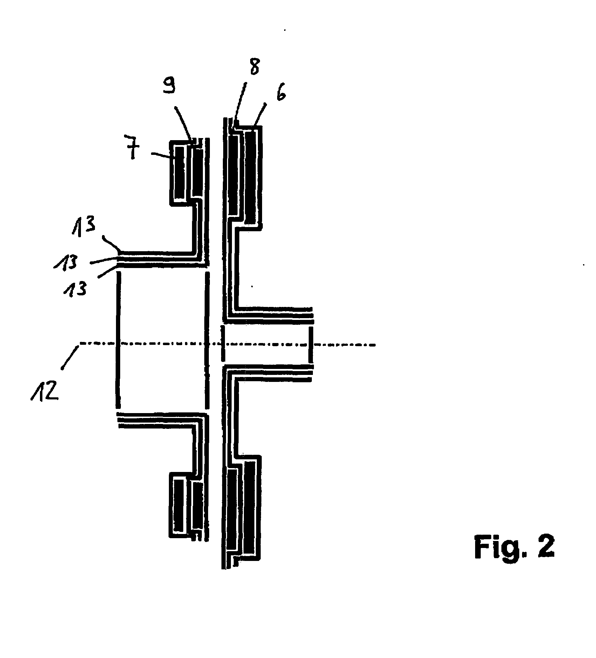

Fig. 2 zeigt in schematischer Ansicht die Sensorelektroden 6 und 7. Diese umfassen erste Kondensatorplatten 8 und zweite Kondensatorplatten 9. Den Sensorelektroden 6 und 7 und den Kondensatorplatten 8 und 9 sind folienartige Lagen 13 aus Polyester zugeordnet. Die Sensorelektroden 6 und 7 sind in den Polyesterfolien 13 eingebettet. Die Kondensatorplatten 8 und 9 sind ebenfalls zwischen zwei Polyesterfolien 13 eingebettet.

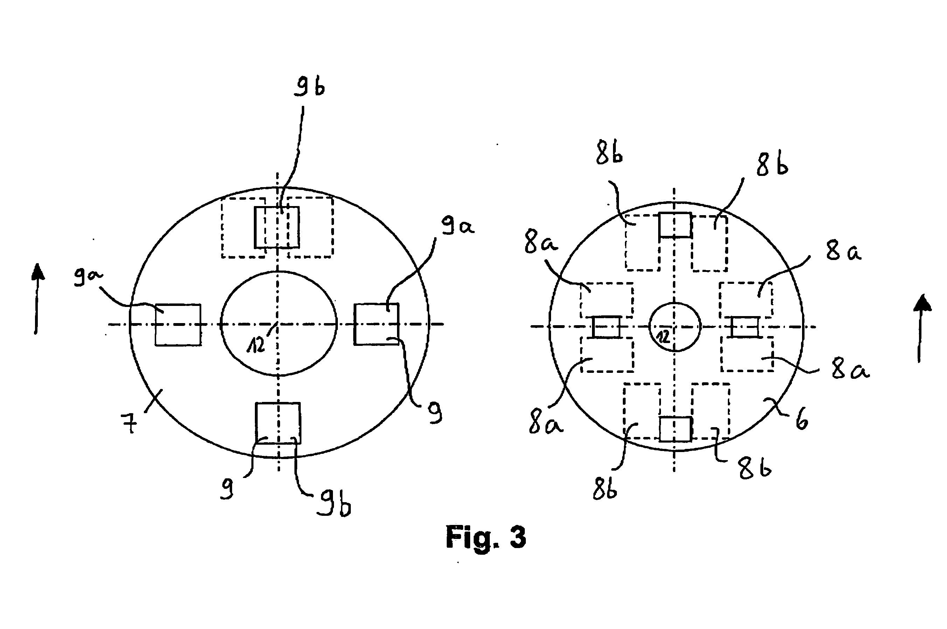

Fig. 3 zeigt in ihrem oberen Teil eine Draufsicht auf die Sensorelektrode 7 gemäß Fig. 2. Diese weist Kondensatorplatten 9a und 9b auf. der untere Teil der Fig. 3 zeigt die Sensorelektrode 6. Diese weist Kondensatorplatten 8a und 8b auf. Die Kondensatorplatten 9a und 9b weisen eine andere Ausdehnung als die Kondensatorplatten 8a und 8b auf. Die Kondensatorplatten 8a und 8b sind rechteckig ausgebildet. Auf der Sensorelektrode 6 sind acht rechteckige Kondensatorplatten umfänglich um die Rotationsachse 12 angeordnet. auf der Sensorelektrode 7 sind um die Buchsenachse 12 umfänglich vier nahezu quadratische Kondensatorplatten 9a und 9b angeordnet.

Wenn die Kondensatorplatten 9a, 9b und 8a, 8b einander gegenüber liegen, verändert sich bei einem radialen oder rotatorischen Versatz der Außenhülse 3 zur Innenhülse 2 der Überlappungsgrad der sich gegenüber liegenden Kondensatorplatten 8a, 8b und 9a, 9b.

Wenn sich nun die Kondensatorplatten 9a und 8a gegenüber liegen, kann eine radiale bzw. translatorische Verschiebung, nämlich in Pfeilrichtung, durch die Veränderung des Überlappungsgrades der Kondensatorplatten 8a und 9a ermittelt werden. Der Überlappungsgrad der Kondensatorplatten 8b und 9b wird bei einer solchen Radialverschiebung nahezu nicht verändert, da sich die Fläche der Kondensatorplatte 9b innerhalb des Bereiches der Kondensatorplatten 8b verschiebt, insoweit ist eine radiale Bewegung unabhängig von einer torsionalen Bewegung detektierbar.

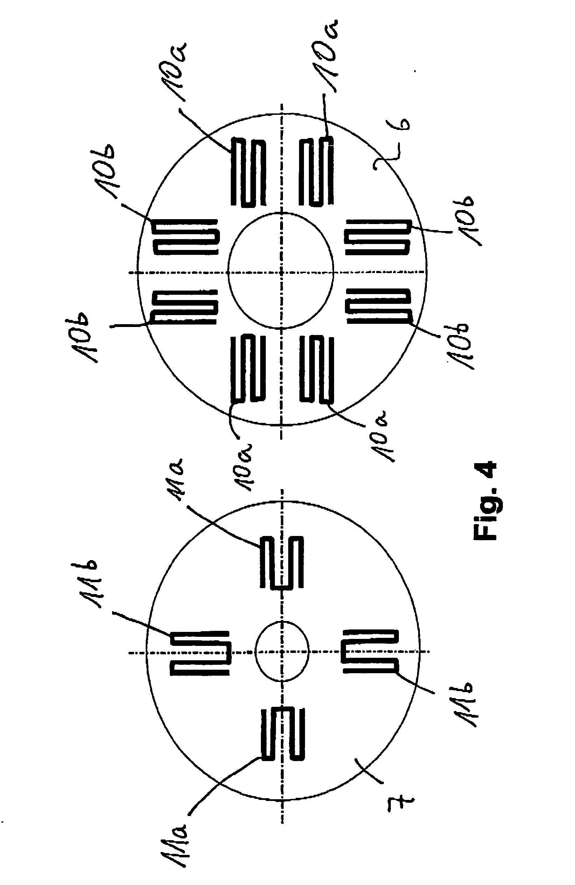

Fig. 4 zeigt Leiterstrukturen 10a, 10b und 11a, 11b, die mäanderförmig ausgestaltet sind. Die Leiterstrukturen 10a, 10b und 11a, 11 b sind Sensorelektroden 6 und 7 zugeordnet und induktiv wirksam. Die mäanderförmig ausgestalteten Leiterstrukturen 10a, 10b und 11a, 11 b bedecken näherungsweise Rechteckflächen. Die flächige Ausgestaltung der induktiv wirksamen Leiterstrukturen 10a, 10b und 11 a, 11 b wird so gewählt, dass das im Rahmen von Fig. 3 beschriebene Messprinzip zur Erfassung radialer und torsionaler Verschiebung durchführbar ist.

Die Kondensatorplatten 8a, 8b und 9a, 9b sowie die Leiterstrukturen 10a, 10b und 11 a, 11 b können auf Polyesterfolien auflaminiert oder aufgeäzt sein. Für Laminier- oder Ätzverfahren eignen sich in besonderer Weise Kunststoffträger, insbesondere Polyesterfolien.

Durch die Verwendung von Kunststoffträgern oder folienartigen Lagen wird den Sensorelektroden eine besondere Elastizität verliehen. Hierdurch ist sicher gestellt, dass der Abstand zwischen Kondensatorplatten und induktiv wirkenden Leiterstrukturen auch bei kardanischer Bewegung der Innenhülse 2 und der Außenhülse 3 relativ zueinander konstant gehalten werden kann. Die Sensorelektrode führt als Ganzes auf Grund ihrer Elastizität Kippbewegungen aus, die mit einer kardanischen Bewegung einhergehen. Insoweit führen die einander gegenüber liegenden Kondensatorplatten oder Leiterstrukturen nur dann größere relative Bewegungen zueinander aus, wenn die Außenhülse 3 bzw. die Innenhülse 2 relativ zueinander verdreht werden.

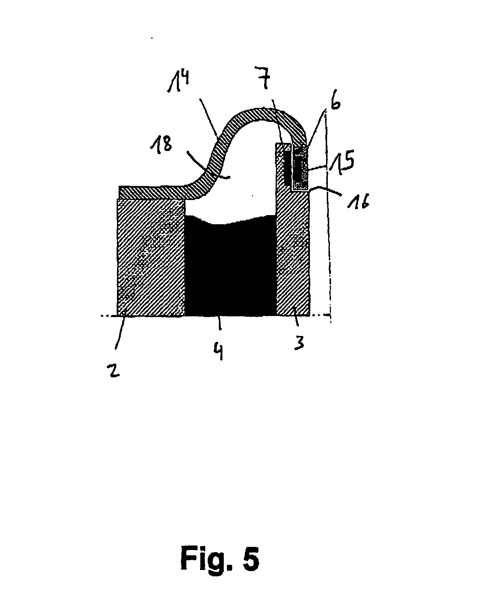

Fig. 5 zeigt eine Innenhülse 2, eine Außenhülse 3 und ein elastisches Medium 4, das als Gummi ausgestaltet ist. Der Buchse gemäß Fig. 5 ist ein zumindest bereichsweise flexibel deformierbares Element 14 zugeordnet, welches mit einem Ende drehfest an der in Innenhülse 2 angelenkt ist. Mit seinem anderen Ende ist es rotationsbeweglich der Außenhülse 3 zugeordnet.

Das rotationsbewegliche Ende ist an einer Gleithülse 15 angelenkt, die relativ zur Außenhülse 3 verdrehbar ist. Die Außenhülse 3 weist eine Ausnehmung 16 auf, in welcher die Gleithülse 15 aufgenommen ist. Die Mantelflächen der Gleithülse 15 und der Außenhülse 3 fluchten miteinander, da die Gleithülse 15 in der Ausnehmung 16 aufgenommen ist. Das zumindest bereichsweise flexibel deformierbare Element 14 ist als Membran aus einem elastomeren Werkstoff ausgebildet. Das Element 14 begrenzt mit dem elastischen Medium 4 ein Volumen 18. Der Außenhülse 3 ist eine Sensorelektrode 7, der Innenhülse 2 über die Gleithülse 15 mittelbar eine Sensorelektrode 6 zugeordnet.

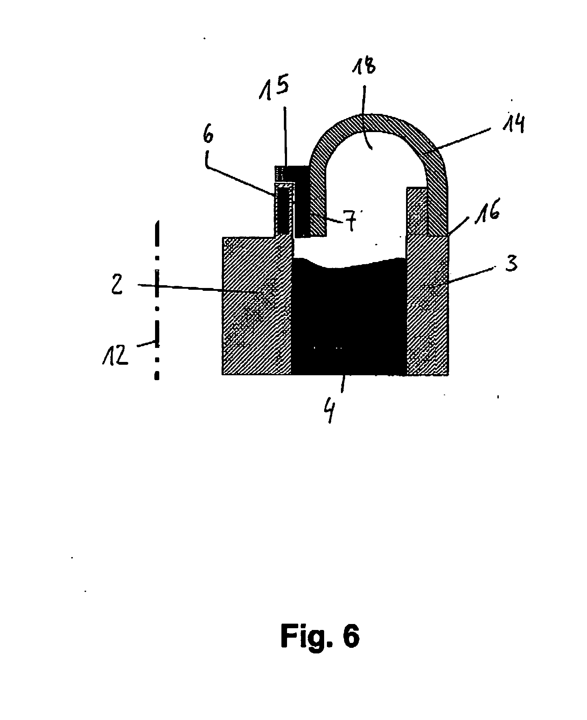

Fig. 6 zeigt eine Buchse mit einer Außenhülse 3, einer Innenhülse 2 und einem elastischen Medium 4. Die Buchse weist eine Membran 14 auf, die an der Außenhülse 3 drehfest angelenkt ist. Die Membran 94 ist in einer Ausnehmung 16 der Außenhülse 3 positioniert. Der Innenhülse 2 ist eine Sensorelektrode 6 zugeordnet. Dem drehbeweglichen freien Ende der Membran 14 ist eine Gleithülse 15 zugeordnet, welche eine Sensorelektrode 7 aufweist. Die Gleithülse 15 ist L-förmig ausgestaltet und ist formschlüssig an die Oberkante der Innenhülse 2 angelegt.

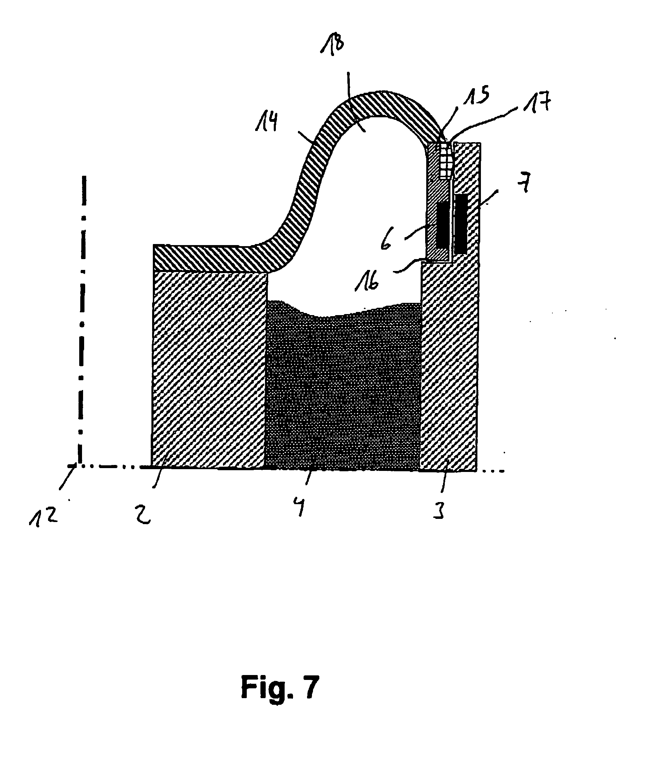

Fig. 7 zeigt eine Buchse mit einer Innenhülse 2, einer Außenhülse 3 und einer Membran 14, welche mit ihrem einen Ende drehfest an der Innenhülse 2 angelenkt ist. Das freie Ende der Membran 14 ist mit einer Gleithülse 15 verbunden, die eine Sensorelektrode 6 aufweist. Die Sensorelektrode 6 liegt einer Sensorelektrode 7 gegenüber, die der Außenhülse 3 zugeordnet ist. Die Gleithülse 15 wird in einer Ausnehmung 16 der Außenhülse 3 aufgenommen. Die Gleithülse 15 weist eine Dichtung 17 auf, welche das Volumen 18 zusammen mit der Membran 14 und dem elastischen Medium 4 abdichtet. Die Dichtung 17 läuft gleitend an der Innenwandung der Außenhülse 3. Die Dichtung 17 ist oberhalb der Sensorelektrode 6 im Bereich des oberen Endes der Außenhülse 3 angeordnet.

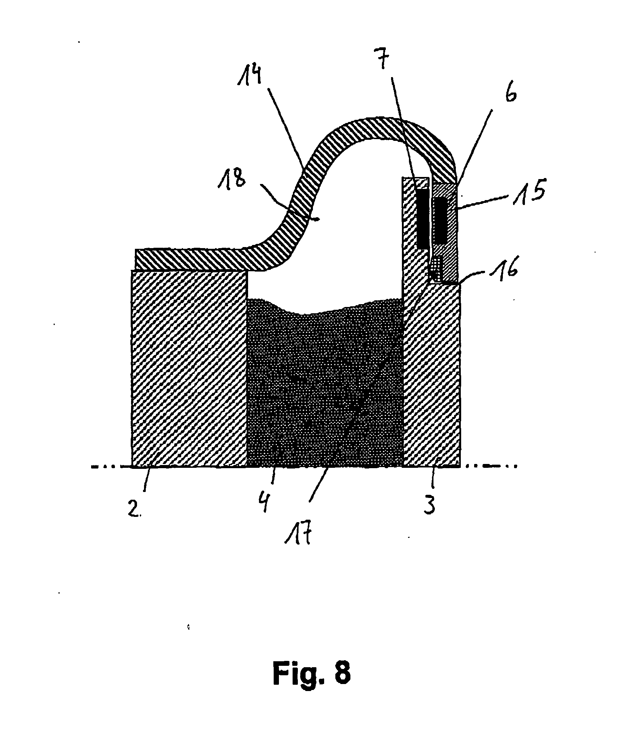

Fig. 8 zeigt eine Buchse mit einer Außenhülse 3 und einer Innenhülse 2, welche durch ein elastisches Medium 4 miteinander verbunden sind. Die Buchse weist des Weiteren eine Membran 14 auf, welche mit ihrem einen Ende drehfest an der Innenhülse 2 angelenkt ist. Das freie Ende der Membran 14 ist mit einer Gleithülse 15 verbunden, welcher eine Sensorelektrode 6 zugeordnet ist. An dem dem freien Ende der Membran 14 abgewandten Teil der Gleithülse 15 ist eine Dichtung 17 angeordnet, welche gleitend an der Außenwandung der Außenhülse 3 anliegt. Die Gleithülse 15 ist in einer Ausnehmung 16 der Außenhülse 3 positioniert. Der Außenhülse 3 ist eine Sensorelektrode 7, der Gleithülse 15 eine Sensorelektrode 6 zugeordnet. Die Membran 14, das elastische Medium 4 sowie die Dichtung 17 begrenzen zusammen mit der Innenhülse 2 und der Außenhülse 3 ein Volumen 18 analog zur Figur 7.

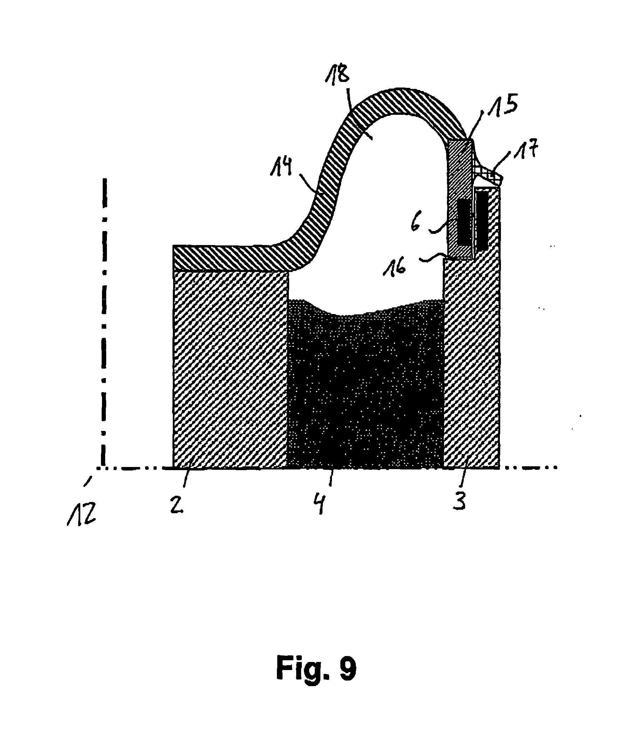

Fig. 9 zeigt eine Buchse mit einer Innenhülse 2 und einer Außenhülse 3, welche durch ein elastisches Medium 4 miteinander verbunden sind. An der Innenhülse 2 ist eine Membran 14 drehfest angelenkt. Das freie Ende der Membran 14 ist mit einer Gleithülse 15 verbunden, welcher eine Sensorelektrode 6 zugeordnet ist. An dem dem freien Ende der Membran zugewandten Ende der Gleithülse 15 ist eine Dichtung 17 angeordnet, die als Dichtlippe ausgestaltet ist. Die Dichtlippe liegt auf der Oberkante der Außenhülse 3 auf und steht mit dieser gleitend in Verbindung. Die Gleithülse 15 ist in einer Ausnehmung 16 der Außenhülse 3 positioniert, welche analog der Ausgestaltung gemäß Fig. 7 dem Volumen 18 zugewandt ist.

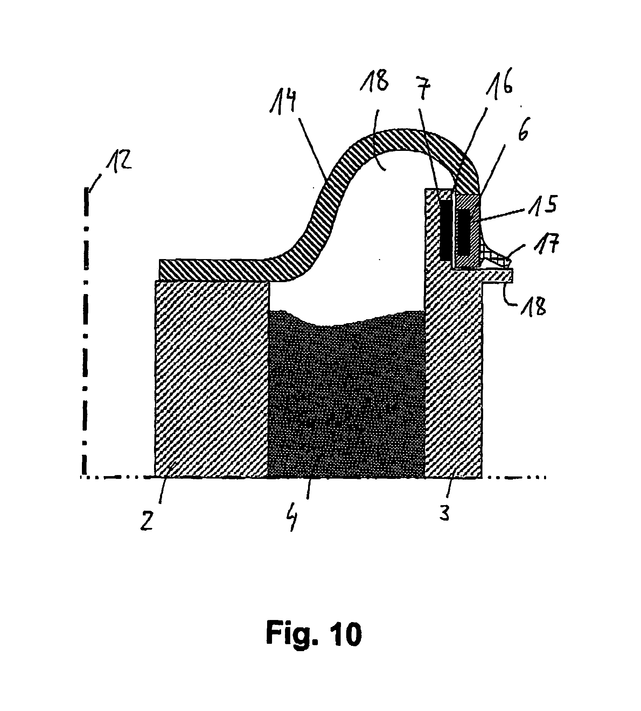

Fig. 10 zeigt eine Buchse mit einer Innenhülse 2 und einer Außenhülse 3, die durch ein elastisches Medium 4 miteinander verbunden sind. An der Innenhülse 2 ist eine Membran 14 mit ihrem einen Ende drehfest angelenkt. Dem anderen Ende der Membran 14 ist eine Gleithülse 15 zugeordnet, welcher eine Sensorelektrode 6 zugeordnet ist. An dem dem freien Ende der Membran 14 abgewandten Ende der Gleithülse 15 ist eine als Dichtlippe ausgebildete Dichtung 17 angeordnet. Die Dichtlippe 17 kommt auf einer Auskragung 18 der Mantelfläche der Außenhülse 3 zur Anlage. Die Gleithülse 15 ist in einer Ausnehmung 16 der Außenhülse 3 angeordnet, welche analog den Figuren 5, 6 und 8 nach außen - also dem Volumen 18 abgewandt - ausgebildet ist. Der Außenhülse 3 ist eine Sensorelektrode 7 zugeordnet.

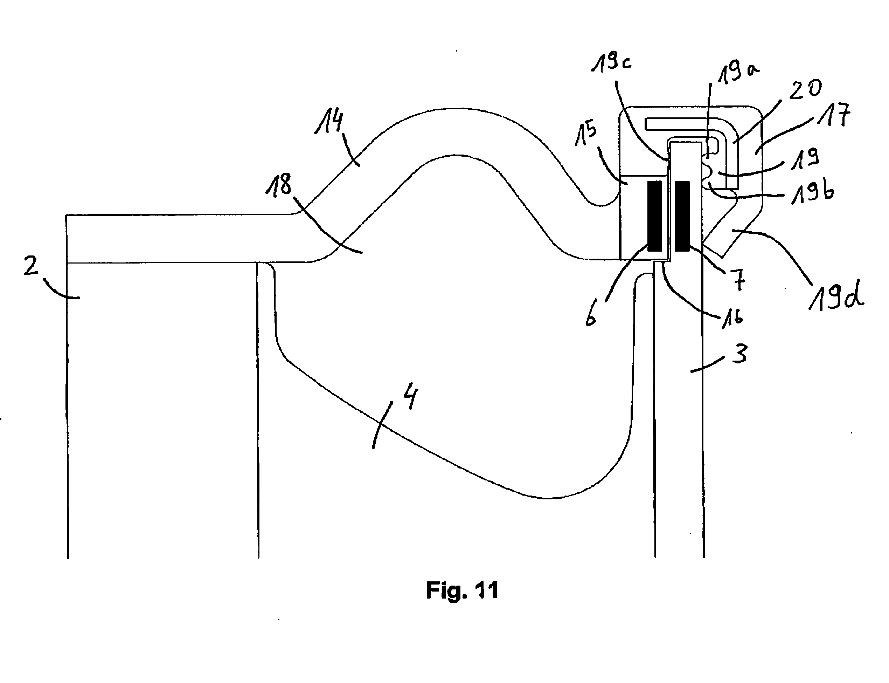

Fig. 11 zeigt eine Buchse mit einer Innenhülse 2, einer Außenhülse 3 und einer Membran 14, welche mit ihrem einen Ende drehfest an der Innenhülse 2 angelenkt ist. Das freie Ende der Membran 14 ist mit einer Gleithülse 15 verbunden, die eine Sensorelektrode 6 aufweist. Die Sensorelektrode 6 liegt einer Sensorelektrode 7 gegenüber, die der Außenhülse 3 zugeordnet ist. Die Gleithülse 15 wird in einer Ausnehmung 16 der Außenhülse 3 aufgenommen.

Die Gleithülse 15 weist eine Dichtung 19 auf, welche das Volumen 18 zusammen mit der Membran 14 und dem elastischen Medium 4 abdichtet. Die Dichtung 19 umfasst eine Dichtlippe 19d, welche an der Außenwandung der Außenhülse 3 gleitend anliegt. Die Dichtung 19 weist des Weiteren zwei Dichtlippen 19a und 19b auf, die an der Außenwandung der Außenhülse 3 gleiten. Eine Dichtlippe 19 c gleitet an der Innenwandung der Außenhülse 3. Durch die Ausbildung der Dichtlippen 19a, 19b, 19c und 19d umgreift die Dichtung 19 den Rand der Außenhülse 3 und stabilisiert die Führung der Gleithülse 15. In die Dichtung 19 ist zu deren Versteifung ein Stabilisierungsring 20 eingebettet.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass die zuvor rein willkürlich gewählten Ausführungsbeispiele lediglich zur Erörterung der erfindungsgemäßen Lehre dienen, diese jedoch nicht auf diese Ausführungsbeispiele einschränken.

## Patentansprüche

1. Buchse, umfassend eine Sensoreinrichtung (1), eine Innenhülse (2) und eine diese umgebende Außenhülse (3), wobei zwischen Innenhülse (2) und Außenhülse (3) ein elastisches Medium (4) angeordnet ist, welches einer Bewegung der Innenhülse (2) relativ zur Außenhülse (3) entgegenwirkt, wobei die Sensoreinrichtung (1) die Bewegung detektiert und wobei die Sensoreinrichtung (1) Mittel (8, 8a, 8b, 9, 9a, 9b, 10, 10a, 10b, 11,11a, 11b, 14) aufweist, welche Bewegungen der Innenhülse (2) relativ zur Außenhülse (3) zumindest teilweise kompensieren, welche einer torsionalen Bewegung der Innenhülse (2) relativ zur Außenhülse (3) überlagert sind,
**dadurch gekennzeichnet, dass** die Mittel ein zumindest bereichsweise flexibel deformierbares Element (14) umfassen, welches mit einem Ende drehfest entweder an der Innenhülse (2) oder an der Außenhülse (3) angelenkt und mit seinem anderen Ende rotationsbeweglich der Außenhülse (3) bzw. der Innenhülse (2) zugeordnet ist.

2. Buchse nach Anspruch 1, **dadurch gekennzeichnet, dass** die Mittel (8, 8a, 8b, 9, 9a, 9b, 10, 10a, 10b, 11, 11a, 11b, 14) ersten und/oder zweiten Sensorelektroden (6, 7) zugeordnet sind, wobei eine Sensorelektrode (6) der Innenhülse (2) und eine Sensorelektrode (7) der Außenhülse (3) zugeordnet ist.

3. Buchse nach Anspruch 1 oder 2, **dadurch gekennzeichnet, dass** die Mittel einander gegenüberliegende erste und zweite Kondensatorplatten (8, 8a, 8b, 9, 9a, 9b) umfassen.

4. Buchse nach einem der Ansprüche 1 bis 3, **dadurch gekennzeichnet, dass** die Mittel einander gegenüberliegende erste und zweite Leiterstrukturen (10, 10a, 10b, 11, 11a, 11b) umfassen, welche mäanderförmig ausgestaltet und induktiv wirksam sind.

5. Buchse nach Anspruch 3 oder 4, **dadurch gekennzeichnet, dass** die Mittel (8, 8a, 8b, 10, 10a, 10b) auf der ersten Sensorelektrode (6) eine andere flächige Ausdehnung als die Mittel (9, 9a, 9b, 11, 11a, 11b) auf der zweiten Sensorelektrode (7) aufweisen.

6. Buchse nach einem der Ansprüche 1 bis 5, **dadurch gekennzeichnet, dass** die Mittel (8, 8a, 8b, 9, 9a, 9b, 10, 10a, 10b, 11, 11 a, 11b) relativ zur Buchsenachse (12) umfänglich angeordnet sind.

7. Buchse nach einem der Ansprüche 2 bis 6, **dadurch gekennzeichnet, dass** zumindest einer Sensorelektrode (6, 7) eine Tellerfeder zugeordnet ist oder zumindest eine Sensorelektrode (6, 7) als Tellerfeder ausgebildet ist.

8. Buchse nach einem der Ansprüche 2 bis 7, **dadurch gekennzeichnet, dass** den Sensorelektroden (6, 7) und/ oder den Mitteln (8, 8a, 8b, 9, 9a, 9b, 10, 10a, 10b, 11, 11a, 11b) folienartige Lagen (13) zugeordnet sind.

9. Buchse nach einem der Ansprüche 1 bis 8, **dadurch gekennzeichnet, dass** das rotationsbewegliche Ende an einer Gleithülse (15) angelenkt ist, die relativ zur Außenhülse (3) bzw. Innenhülse (2) verdrehbar ist.

10. Buchse nach Anspruch 9, **dadurch gekennzeichnet, dass** die Innenhülse (2) und/ oder die Außenhülse (3) Ausnehmungen (16) zur Aufnahme der Gleithülse (15) oder des Elements (14) aufweist.

11. Buchse nach Anspruch 9 oder 10, **dadurch gekennzeichnet, dass** der Gleithülse (15) eine Dichtung (17, 19) zugeordnet ist

12. Buchse nach Anspruch 11, **dadurch gekennzeichnet, dass** die Dichtung (17, 19) als Dichtlippe ausgebildet ist oder Dichtlippen (19a, 19b,19c, 19d) umfasst.

13. Buchse nach einem der Ansprüche 1 bis 12, **dadurch gekennzeichnet, dass** das Element (14) als Membran ausgebildet ist.

14. Buchse nach einem der Ansprüche 11 bis 13, **dadurch gekennzeichnet, dass** die Dichtung (17) und das Element (14) ein Volumen (18) abdichten, in dem die Mittel der Sensoreinrichtung (1) positioniert sind.

## Claims

1. Bush, comprising a sensor device (1), an inner sleeve (2) and an outer sleeve (3) surrounding the latter, wherein an elastic medium (4) is arranged between the inner sleeve (2) and the outer sleeve (3) and counteracts any movement of the inner sleeve (2) relative to the outer sleeve (3), wherein the sensor device (1) detects the movement, and wherein the sensor device (1) has means (8, 8a, 8b, 9, 9a, 9b, 10, 10a, 10b, 11, 11a, 11b 14) which at least partially compensate for movements of the inner sleeve (2) relative to the outer sleeve (3) which are superimposed on a torsional movement of the inner sleeve (2) relative to the outer sleeve (3),
**characterized in that** the means comprise an element (14) which can be deformed flexibly at least in places, is articulated at one end in a rotationally fixed manner either on the inner sleeve (2) or on the outer sleeve (3), and whose other end is associated with the outer sleeve (3) or the inner sleeve (2), respectively, such that it can rotate.

2. Bush according to Claim 1, **characterized in that** the means (8, 8a, 8b, 9, 9a, 9b, 10, 10a, 10b, 11, 11a, 11b 14) are associated with first and/or second sensor electrodes (6, 7), wherein one sensor electrode (6) is associated with the inner sleeve (2), and one sensor electrode (7) is associated with the outer sleeve (3).

3. Bush according to Claim 1 or 2, **characterized in that** the means comprise mutually opposite first and second capacitor plates (8, 8a, 8b, 9, 9a, 9b).

4. Bush according to one of Claims 1 to 3,
**characterized in that** the means comprise mutually opposite first and second conductor structures (10, 10a, 10b, 11, 11a, 11b) which are in a meandering shape and act inductively.

5. Bush according to Claim 3 or 4, **characterized in that** the means (8, 8a, 8b, 10, 10a, 10b) on the first sensor electrode (6) have a different area extent than the means (9, 9a, 9b, 11, 11a, 11b) on the second sensor electrode (7).

6. Bush according to one of Claims 1 to 5, **characterized in that** the means (8, 8a, 8b, 9, 9a, 9b, 10, 10a, 10b, 11, 11a, 11b) are arranged circumferentially relative to the bush axis (12).

7. Bush according to one of Claims 2 to 6, **characterized in that** at least one sensor electrode (6, 7) is associated with a cup spring, or at least one sensor electrode (6, 7) is in the form of a cup spring.

8. Bush according to one of Claims 2 to 7, **characterized in that** film-like layers (13) are associated with the sensor electrodes (6, 7) and/or with the means (8, 8a, 8b, 9, 9a, 9b, 10, 10a, 10b, 11, 11a, 11b).

9. Bush according to one of Claims 1 to 8, **characterized in that** the rotationally moving end is articulated on a sliding sleeve (15) which can rotate relative to the outer sleeve (3) and/or inner sleeve (2).

10. Bush according to Claim 9, **characterized in that** the inner sleeve (2) and/or the outer sleeve (3) have/has recesses (16) for holding the sliding sleeve (15) or the element (14).

11. Bush according to Claim 9 or 10, **characterized in that** the sliding sleeve (15) has an associated seal (17, 19).

12. Bush according to Claim 11, **characterized in that** the seal (17, 19) is in the form of a sealing lip or comprises sealing lips (19a, 19b, 19c, 19d).

13. Bush according to one of Claims 1 to 12, **characterized in that** the element (14) is in the form of a membrane.

14. Bush according to one of Claims 11 to 13, **characterized in that** the seal (17) and the element (14) seal a volume (18) in which the means of the sensor device (1) are positioned.

## Revendications

1. Manchon, comprenant un arrangement de capteur (1), une douille intérieure (2) et une douille extérieure (3) entourant celle-ci, un milieu élastique (4) étant disposé entre la douille intérieure (2) et la douille extérieure (3), lequel agit à l'encontre d'un déplacement de la douille intérieure (2) par rapport à la douille extérieure (3), l'arrangement de capteur (1) détectant le mouvement, et l'arrangement de capteur (1) présentant des moyens (8, 8a, 8b, 9, 9a, 9b, 10, 10a, 10b, 11, 11a, 11b, 14), qui compensent au moins en partie les déplacements de la douille intérieure (2) par rapport à la douille extérieure (3), lesquels sont superposés à un mouvement de torsion de la douille intérieure (2) par rapport à la douille extérieure (3),
**caractérisé en ce que** les moyens comprennent un élément (14) déformable de manière flexible au moins en partie, qui est articulé par une extrémité de manière solidaire en rotation soit à la douille intérieure (2) soit à la douille extérieure (3) et qui est associé par son autre extrémité, de manière mobile en rotation, à la douille extérieure (3) ou à la douille intérieure (2).

2. Manchon selon la revendication 1, **caractérisé en ce que** les moyens (8, 8a, 8b, 9, 9a, 9b, 10, 10a, 10b, 11, 11a, 11b, 14) sont associés à des première et/ou deuxième électrodes de capteur (6, 7), une électrode de capteur (6) étant associée à la douille intérieure (2) et une électrode de capteur (7) étant associée à la douille extérieure (3).

3. Manchon selon la revendication 1 ou 2, **caractérisé en ce que** les moyens comprennent des première et deuxième plaques de condensateur (8, 8a, 8b, 9, 9a, 9b) en regard l'une de l'autre.

4. Manchon selon l'une quelconque des revendications 1 à 3, **caractérisé en ce que** les moyens comprennent des première et deuxième structures conductrices (10, 10a, 10b, 11, 11a 11b) en regard l'une de l'autre, qui sont configurées en forme de méandres et qui agissent par induction.

5. Manchon selon la revendication 3 ou 4, **caractérisé en ce que** les moyens (8, 8a, 8b, 10, 10a, 10b) présentent, sur la première électrode de capteur (6), une autre étendue superficielle que les moyens (9, 9a, 9b ; 11, 11a 11b) sur la deuxième électrode de capteur (7).

6. Manchon selon l'une quelconque des revendications 1 à 5, **caractérisé en ce que** les moyens (8, 8a, 8b, 9, 9a, 9b, 10, 10a, 10b, 11, 11a, 11b) sont disposés sur la périphérie par rapport à l'axe du manchon (12).

7. Manchon selon l'une quelconque des revendications 2 à 6, **caractérisé en ce qu'**au moins une électrode de capteur (6, 7) est associée à un ressort Belleville, ou au moins une électrode de capteur (6, 7) est réalisée sous forme de ressort Belleville.

8. Manchon selon l'une quelconque des revendications 2 à 7, **caractérisé en ce que** l'on associe aux électrodes de capteur (6, 7) et/ou aux moyens (8, 8a, 8b, 9, 9a, 9b, 10, 10a, 10b, 11, 11a, 11b), des couches de type film (13).

9. Manchon selon l'une quelconque des revendications 1 à 8, **caractérisé en ce que** l'extrémité mobile en rotation est articulée à une douille de glissement (15) qui peut tourner par rapport à la douille extérieure (3) ou à la douille intérieure (2).

10. Manchon selon la revendication 9, **caractérisé en ce que** la douille intérieure (2) et/ou la douille extérieure (3) présente des évidements (16) pour recevoir la douille de glissement (15) ou l'élément (14).

11. Manchon selon la revendication 9 ou 10, **caractérisé en ce que** la douille de glissement (15) est associée à une garniture d'étanchéité (17, 19).

12. Manchon selon la revendication 11, **caractérisé en ce que** la garniture d'étanchéité (17, 19) est réalisée sous forme de lèvre d'étanchéité ou comprend des lèvres d'étanchéité (19a, 19b, 19c, 19d).

13. Manchon selon l'une quelconque des revendications 1 à 12, **caractérisé en ce que** l'élément (14) est réalisé sous forme de membrane.

14. Manchon selon l'une quelconque des revendications 11 à 13, **caractérisé en ce que** la garniture d'étanchéité (17) et l'élément (14) étanchent un volume (18) dans lequel sont positionnés les moyens de l'agencement de capteur (1).
